# EUROPEAN PATENT APPLICATION

(11) **EP 1 180 838 A1**
(43) Date of publication of application: **20.02.2002**
(21) Application number: 01203114.2
(22) Date of filing: 15.08.2001
(51) Int. Cl.: H02G 3/32, F16L 3/22

(54) **Wire and cable support clip**

(30) Priority: 18.08.2000 US 642527
(71) Applicant: Thomas & Betts International, Inc., Sparks, Nevada 89434 (US)
(72) Inventor: Pfaller, Mark J., Memphis Tennessee 38133 (US)
(74) Representative: Iemenschot, Johannes Andreas, Ir.

(57) **Abstract**

A wire clip (10) supports a plurality of electrical wires and cables (50) to a wallboard stud (52) in a position spaced from the wallboard (54). The wiring clip (10) includes a mounting member (12) for securement to the stud (52). A cable support member (20) extends from the mounting member (12) for accommodating electrical cables (50). A cable securement member (26) is frangibly formed with the cable support member (20) to provide for detachment therefrom. Cable securement member, once detached from the cable support member, is secured to the cable support member in a manner which serves the wires therebetween to space the wires from the wallboard (54).

## Description

### FIELD OF THE INVENTION:

The present invention is directed generally to a clip for securing electrical wires and cables to a stud used to support wallboard in building construction. More particularly, the present invention is directed to a wiring clip which supports wires at a given depth from the wall board.

### BACKGROUND OF THE INVENTION:

In residential and commercial construction gypsum board panels, commonly referred to as wallboard, are secured to the face of studs or framing members These framing members can be formed of wood, metal or various other materials. Prior to attaching the wallboard to the studs, the internal electrical wiring to various switches and receptacles is installed. Much of the wiring runs parallel to the studs supporting the wallboard. Once the wiring is run, the wallboards are secured to the studs usually by fasteners such as dry wall nails or screws. Placement of the wallboard typically conceals the studs so that when a fastener is employed to secure the wallboard to the stud, it may be easy to miss the stud. The fastener is then driven into the open interior of the wall. Depending upon the location of the wiring, a misapplied fastener, especially when applied by a power tool, may pierce the wiring behind the wallboard causing damage to the insulation or covering over the wire. This may lead to an undesirable electrical short Quite often, this damage may go unnoticed until a problem occurs. Once noticed, repair or replacement of the wire may include the costly removal and replacement of the wallboard.

In order to prevent problems of this type the National Electrical Code specifies that the wiring must be positioned a specified distance away from the stud. Positioning of the wire in this manner results in reduction in the tendency to piece the wire insulation upon a misapplication of the wallboard fastener. The art has seen a variety of clips which may be secured to the stud prior to wallboard installation which supports the wiring at a safe distance from the wallboard.

One type of clip, such as that manufactured by Arlington Industries, Inc of Scranton, PA under the trade designation CS1 and CS6 Cable Support, provides for securement of the wire against the side of the stud This type of clip cannot support plural wires spaced from the side of the stud, which in many situations is advantageous

U.S. Patent No. 5,067,677 discloses a wire harness which can be secured to the side of the stud. The harness includes an extending strut including a plurality of discrete clips attached thereto which is recessed from the face of the stud. Each of the clips secures an individual electrical wire. The number and actual size of the wires which the harness supports is dictated by the construction and location of the clips on the strut.

U.S. Patent No. 5,141,185 discloses a metallic wiring clip used to support a plurality of wires a given distance from the face of the stud. The clip of the '185 patent employs a foldable arm which is affixed to the distal end of a strut. By folding the arm against the strut, plural wires may be supported a given distance from the face of the stud to which the clip is secured. While this clip serves adequately to space the wires from the face of the stud, the foldable arm may have a tendency to cause the wires to bunch up rather than maintain desired spatial separation which is beneficial in running multiple wires behind the wallboard. Moreover, as this clip is formed from metal, it is more difficult to manufacture. Further, the sharp edges, or burrs, on the metal wiring clip may nick or scrape the wire insulation.

It is therefore desirable to provide a wire harness clip which supports and fixes the position of plural wires a given distance from the stud and maintains the wire in spatial separation.

### SUMMARY OF THE INVENTION:

It is an object of the present invention to provide a wiring clip which spaces a plurality of electrical wires a given distance from wallboard which is attached to a stud.

It is a further object of the present invention to provide a wiring clip which supports a plurality of electrical wires in spaced separation.

It is a still further object of the present invention to provide a wiring clip which is economically formed of integrally molded plastic and which is easy to use by the installer.

In the efficient attainment of these and other objects, the present invention provides a wiring clip for supporting a plurality of electrical cables to a wallboard stud. The wiring clip includes a mounting member for securement of the stud. A cable support member extends from the mounting member for accommodating electrical cables in spaced separation. The cable securement member is frangibly formed with the cable support member for detachment therefrom. The wiring clip includes means for securing the detached cable securement member to the cable support member for securing the cables therebetween.

As shown by way of the preferred embodiment herein, the cable securement member is frangibly coupled to the cable support member by a flexible web which is detachable by the installer for use. The securing means includes a pair of rails extending from the planar surface of the cable securement member. The cable support member includes a pair of spaced apart passageways therethrough for insertably accommodating the rails of the cable securement member therein. The cable securement member may be secured to the cable support member in generally parallel fashion so as to maintain the wires supported therebetween in spaced separation.

### BRIEF DESCRIPTION OF DRAWINGS:

Figure 1 is a top perspective view of a wire support clip of the present invention, including cable securement member frangibly attached to a cable support member.

Figure 2 is a top plan view of the wire support clip of Figure 1.

Figure 3 is a bottom perspective view of the wire support clip of Figure 1.

Figure 4 is a side elevational showing of the wire support clip of Figure 1 with the cable securement member detached from the cable support member, and positioned to secure a plurality of electrical cables therebetween.

### DETAILED DESCRIPTION OF THE PREFERRED EMBODIMENT:

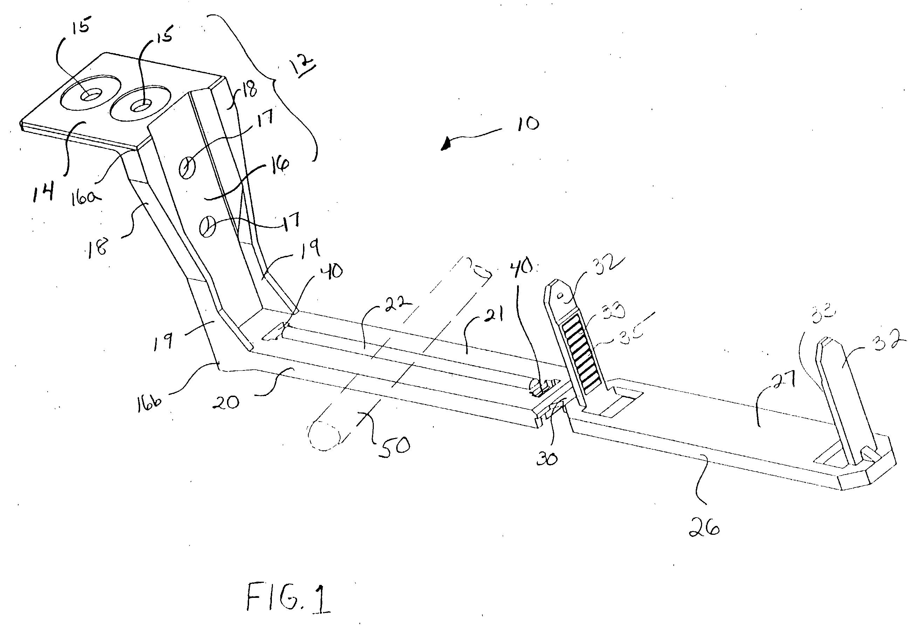

A preferred embodiment of the wiring clip of the present invention is shown in Figures 1-5. The present invention may be used to secure electrical wires and cables (hereinafter referred to collectively as "cables") at a location spaced from the face of a stud used to support and anchor wallboard. In residential and commercial construction, the National Electrical Code (NEC) specifies that wiring be positioned at a fixed safe distance from the nearest edge of the framing member, in this case a wallboard stud. The Code requires that the wires be positioned at a distance no less than 1¼ inches from the face of the stud. In this manner, a misapplied fastener such as a nail or screw which would extend through the wallboard without hitting the stud, will not pierce or nick the insulation of the wiring, as the wiring is set a sufficient distance back from the wallboard. The wiring clip described herein provides an inexpensive, simple and effective technique for supporting a plurality of electrical cables at the desired spacing from the wallboard.

Wiring clip 10 of the present invention is an elongate, integrally formed member Preferably, wiring clip 10 is formed of a suitably rigid thermoplastic material such as nylon or polycarbonate and which may be molded in a conventional injection molding process. While integrally molded plastic is preferred, wiring clip 10 may be formed of other materials which exhibit the requisite rigidity, and as will be described in further detail hereinbelow, the requisite flexibility.

Wiring clip 10 is an elongate element having a mounting member 12 formed at one end thereof. Mounting member 12 is generally an L-shaped bracket-like structure including an elongate distal portion 14 and an elongate intermediate portion 16. Distal portion 14 and intermediate portion 16 are arranged at a right angle with respect to one another such that distal portion 14 extends perpendicularly from one end 16a of intermediate portion 16. Distal portion 14 is generally a planar member having a pair of counter-sunk apertures 15 extending therethrough. Similarly, intermediate portion 16 is a generally planar member having a pair of spaced apart apertures 17 extending therethrough. As will be described in further detail hereinbelow, apertures 15 and 17 of mounting member 12 accommodate suitable fasteners such as nails or screws which may be used to secure wiring clip 10 to a stud or other wallboard framing member.

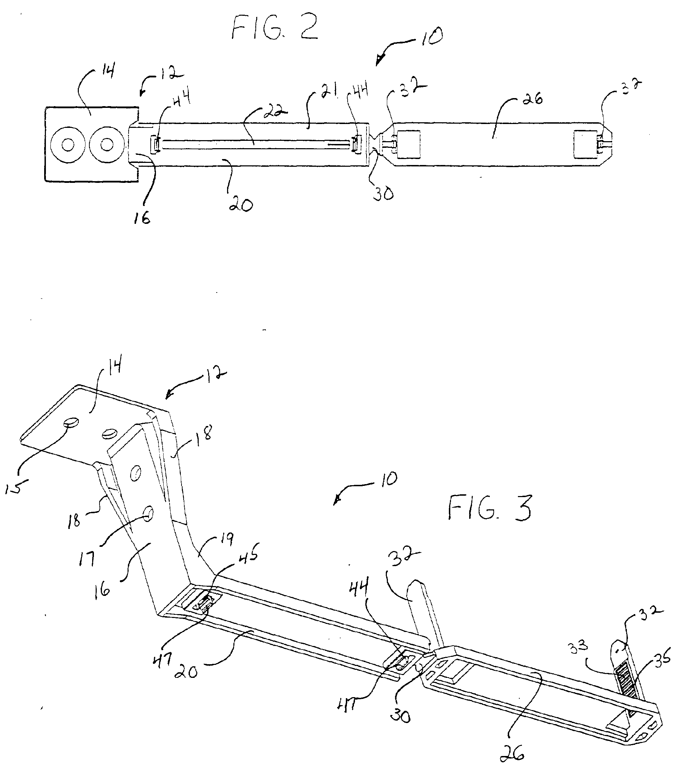

As particularly shown in Figure 3, intermediate portion 16 includes a pair of reinforcing ribs 18 extending laterally outward in a wing-like fashion. Ribs 18 extend toward and join distal portion 14 adjacent end 16a to provide added structural rigidity at the juncture of distal portion 14 and intermediate portion 16.

Wiring clip 10 further includes a cable support member 20 extending from intermediate portion 16. Cable support member 20 extends generally perpendicular from intermediate portion 16 at an end 16b opposite the end 16a from which distal portion 14 extends. Cable support member 20 extends in a direction opposite that of distal portion 14 so that cables may be supported thereto at a location spaced from the stud to which the wiring clip 10 is mounted.

Cable support member 20 is a generally elongate planar member having a cable support surface 21 against which electrical cables may be placed. Rib extensions 19 extending from ribs 18 of intermediate portion 16 extend toward the cable support surface 21 to provide enhanced structural rigidity to the clip at the location of the juncture between intermediate portion 16 and cable support member 20. Cable support member 20 includes an elongate tongue 22 extending upwardly from cable support surface 21. Tongue 22 provides an area of concentrated relief for engagement with the cables supported thereover, and which will be described in further detail hereinbelow help securely support the cables to the wiring clip 10.

Wiring clip 10 further includes a cable securement member 26 formed at a distal end of cable support member 20. Cable securement member 26 is an elongate generally planar element which is attached to cable support member 20 by an integrally formed frangible web 30. Web 30 is formed in the molding process and is sufficiently thin and flexible such that it may be easily broken so as to frangibly detach cable securement member 26 from cable support member 20. This allows for securement of cables between cable support surface 21 of cable support member 20 and a cable support surface 27 of cable securement member 26 which, as will be described in further detail hereinbelow, are placed in spaced apart facing opposition with the electrical cables therebetween. The securement of detached cable securement member 26 to cable support member 20 provides for the secure retention of the electrical cables and the proper positioning of the cables at a location spaced from the wallboard.

In the presently described embodiment, one preferred technique for securing the cable securement member 26 to cable support 20 is shown. Cable securement member 26 includes a pair of spaced apart, upwardly extending rails 32. Rails 32 extend from a location adjacent. the opposed ends of elongate cable securement member 26. Rails 32 are generally planar members having a pair of facing surfaces 33 which include thereon a plurality of longitudinally spaced transversely extending locking teeth 35. Rails 32 are generally of a shape similar to that of a tail of a conventional cable tie including conventional locking teeth along the planar surface thereof

In order to retain the cable securement member 26 at a location spaced from the cable support member 20, the cable support member includes a pair of spaced apart passageways 40 extending therethrough. Passageways 40 are positioned at a location adjacent each end of cable support member 20 and are spaced apart the same distance as the spacing of rails 32 on cable securement member 26. The rails 32 of the separated cable securement member 26 are insertable into the passageways 40 of cable support member 20.

In order to captively engage and lock rails 32 within passageways 40, cable support member 20 includes a locking member in the form of a pawl 44 extending into each passageway 40. Pawl 44 is similar to a locking pawl in a conventional cable tie and includes a locking tooth 45 which is engageable progressively with teeth 35 of rails 32 to lock the rails within the passageways 40. The manner and operation of the locking engagement between the pawls 44 and the rails 32 are well known to those skilled in this cable tie art. Additionally, each pawl 44 may include a depending tang 47 which may be deflected so as to disengage the locking engagement between the pawl and the teeth of rails 32 so as to permit removal of the cable securement member from the cable support member.

Having described the preferred embodiment of the wiring clip 10 of the present invention, its operation in supporting a plurality of cables at a location spaced from wallboard may be shown.

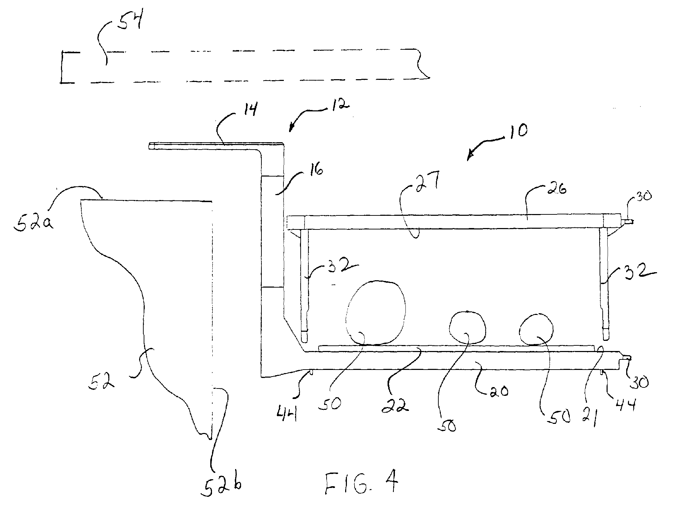

Referring particularly to Figures 1 and 4, wiring clip 10 may be used to secure a plurality of electrical cables 50 to a framing stud 52 which support wallboard 54 thereagainst. As it is common in the construction trade, the stud 52 includes a face 52a against which the wallboard 54 is attached. A side 52b of stud 52 extends perpendicularly from the face 52a. Prior to attachment of the wallboard 54 to the stud 52, wiring clip 10 of the present invention is secured to stud 52. Wiring clip 10 may be secured to stud 52 by employing mounting member 12 which is attached to stud 52 by fasteners such as nails or screws through apertures 15 and into the face 52a of stud 52. Alternatively, or in combination therewith, fasteners such as nails or screws may be inserted through apertures 17 of intermediate portion 16 so as to secure the mounting member to the side 52b of stud 52. In either event, the distal portion 14 of mounting member 12 lies along face 52a while the intermediate portion 16 lies along side 52b of stud 52. In that regard the distal portion 14 of mounting member 12 is formed to have a thickness which is considerably thinner than the thickness of the remaining wiring clip 10. This facilitates proper positioning of the wallboard against the face 52a of stud 52. Further, the recessed apertures 15 help maintain the head of the fastener at a position as not to interfere with the placement of the wallboard 54 against the stud 52.

Once the wiring clip shown in Figure 1 is secured to the stud, the wires and cables may be run vertically along the length of the stud 52. The cables 50 may be positioned against cable support members as shown in Figures 1 and 4. The cables 50 are positionally confined between the upstanding intermediate portion 16 of mounting member 12 and the adjacent upstanding rib 32 of cable securement member 26, which remains attached to cable support member during the installation of the cables. The length of intermediate portion 16 is selected such that it positions the extending cable support member 20 at a depth which meets or exceeds the depth required by the National Electrical Code for spacing wires away from the face 52a of the stud 52 and thereby the wallboard 54 supported thereagainst. Once the desired number of cables 50 are positioned against cable support member 20 the installer may frangibly remove the cable securement member therefrom. The cable securement member 26 being held to cable support member 20 by detachable web 30 is easily removed by simple manual bending and twisting. While it is contemplated that only manual bending and twisting is necessary, the installer may choose to use a cutting tool such as a knife to effect removal thereof.

Referring more specifically to Figure 4, once the cable securement member is frangibly detached from cable support member 20 it may be reattached thereto in a manner which holds the electrical cables 50 therebetween. The detached cable securement member 26 is positioned such that cable support surface 27 is placed in facing opposition to cable support surface 21 of cable support member 20. The rails 32 thereof are placed into the passageways 40 of cable support member in a manner such that ratchet engagement is made between the pawls 44 and the teeth 35 to effect securement of the rails in the passageways. The cable securement member is brought further down toward the cable support member until cable support surface 27 engages the electrical cables 50 supported therebetween. The cable securement member is brought down until the cables 50 are tightly wedged between the cable securement member 20 and the cable support member 20. In that regard, as each rail independently engages the pawl 44, each rail 32 may be inserted into the passageway to a different depth. This allows the cable securement member to be secured at an angle with respect to the cable support member so as to permit securement of different diameter cables therebetween. The raised tongue 22 of cable support member 20 provides for enhanced frictional securement of cables 50 between cable support 20 and cable securement member 26.

While the preferred embodiment of the present invention employs cable tie like engagement between rails 32 and the locking 44 and apertures 40, other techniques for securing cable securement member to cable support member may be employed. For example, rails may be inserted in a passageway having no locking member therein and then the rails can be separately locked to each other or to the cable support member.

Various other modifications to the foregoing disclosed embodiments will now be evident to those skilled in the art. Thus, the particularly described preferred embodiments are intended to be illustrative and not limited thereto. The true scope of the invention is set forth in the following claims.

## Claims

1. A wiring clip for supporting a plurality of electrical cables to a stud having a face to which the wallboard is attached and a side extending perpendicularly therefrom, said clip comprising:
a mounting member for securement to said stud;
a cable support member extending from said mounting member and outwardly from said side of said stud for accommodating said cables; and
a cable securement member frangibly formed with said cable support member for detachment therefrom, said detached cable securement member being securable to said cable support member for securing said cables therebetween.

2. A wiring clip of claim 1, wherein said mounting member includes an elongate distal portion having a pair of mounting apertures therethrough for securement thereof to said face of said stud.

3. A wiring clip of claim 2, wherein said mounting member includes an elongate intermediate portion for securement to said side of said stud with said cable support member extending perpendicularly therefrom.

4. A wiring clip of claim 3, wherein said cable support member includes a planar surface for accommodating said cables.

5. A wiring clip of claim 4, wherein said distal portion of said mounting member extends perpendicularly from said intermediate portion for providing support along said face and said side of said stud.

6. A wiring clip of claim 5, wherein said mounting member includes longitudinal reinforcing ribs extending along said intermediate portion towards said distal portion for providing enhanced rigidity thereat.

7. A wiring clip of claim 6, wherein said mounting member, said cable support member and said cable securement member are integrally formed of molded plastic.

8. A wiring clip of claim 3, wherein cable securement member is elongate and includes a planar surface for placement in spaced facing opposition to said planar surface of said cable support member.

9. A wiring clip of claim 8, further including a pair of spaced apart, elongate rails extending from said planar surface of said cable securement member, and a pair of spaced apart passageways through said cable support member for insertably accommodating said rails of said cable securement member therein.

10. A wiring clip of claim 9, wherein said cable support member includes a locking element extending into each of said passageways for locking engagement with said inserted rails.

11. A wiring clip of claim 10, wherein said rails include a planar surface having a plurality of locking teeth therealong and wherein said locking element is a pawl having a pawl tooth therein for ratchet engagement with said teeth of said rail.

12. A wiring clip of claim 11, wherein said pawl is deflectable for releasable engagement with said teeth of said rails for releasably securing said rails in said passageway.

13. A wiring clip of claim 3, wherein said cable securement member is frangibly coupled to said cable support member by a flexible separable web.

14. A wiring clip of claim 5, wherein said thickness of said distal portion is substantially less than the thickness of said intermediate portion.

15. A wiring clip of claim 9, wherein said elongate rails are independently insertable into said passageways at a selected insertion depth so as to vary the spacing of said cable support member and said cable securement member with respect to each of said rails.

16. A clip for accommodating electrical cables at a location spaced from wallboard placed against the face of the stud, comprising:
a mounting member for securement to said stud;
a cable support member extending from said mounting member for supporting said cables at a location spaced from the face of said stud said cable support member having a passageway therethrough;
a cable securement member attachable to said cable support member and including a projection extending therefrom for insertable accommodation within said passageway of said cable support member for securing said cables between said cable support securement and said cable support member; and
a locking element extending into said passageway for locking engagement with said projection.

17. A clip of claim 16, wherein said locking element includes a locking pawl having at least one locking tooth thereon and wherein said projection includes a plurality of teeth along the length thereof for locking engagement with said locking thereof.

18. A clip of claim 17 wherein said locking engagement between said locking pawl of said projection is releasable.

19. A clip of claim 16 wherein said cable support member includes a pair of said passageways which are spaced apart and support said cables therebetween.

20. A clip of claim19 wherein said cable securement member includes a pair of said projections insertable into said spaced apart passageways of said cable support member.
